# EUROPÄISCHE PATENTSCHRIFT

(11) **EP 2 388 154 B1**
(45) Veröffentlichungstag und Bekanntmachung des Hinweises auf die Patenterteilung: **22.05.2013**
(21) Anmeldenummer: 11158758.0
(22) Anmeldetag: 18.03.2011
(51) Int. Cl.: B60C 11/12

(54) **Laufstreifenprofil eines Fahrzeugluftreifens**
Tread portion of a pneumatic tyre
Profil de bande de roulement d'un bandage pneumatique de véhicule

(30) Priorität: 18.05.2010 DE 102010016987
(43) Veröffentlichungstag der Anmeldung: 23.11.2011
(73) Patentinhaber: Continental Reifen Deutschland GmbH, 30165 Hannover (DE)
(72) Erfinder: Rittweger, Stefan, 30163, Hannover (DE)
(74) Vertreter: Finger, Karsten

(56) Entgegenhaltungen:
- EP-A1- 0 590 375
- EP-A1- 2 055 506
- US-A1- 2009 101 259

## Beschreibung

Die Erfindung betrifft ein Laufstreifenprofil eines Fahrzeugluftreifens mit radial erhabenen durch Rillen voneinander beabstandeten Profilelementen, welche durch eine den Straßenkontakt bildende radial äußere Oberfläche begrenzt sind, wobei in einem oder mehreren Profilelementen parallel zu einander verlaufende Feineinschnitte in der radial äußeren Oberfläche ausgebildet sind.

Es ist bekannt, bei Sommerreifen mit guter Trockenperformance zur Verbesserung der Nassgriffeigenschaften in den Profilblockelementen von Profilblockreihen Feineinschnitte auszubilden. Quer zur Fahrtrichtung orientiert gewährleisten diese gute Beschleunigungs-und gute Bremseigenschaften und längs zur Fahrtrichtung ausgerichtet gute Handlingeigenschaften. Die hierfür jeweils erforderlichen Griffeigenschaften entstehen dadurch, dass das durch den Feineinschnitt zerteilte Profilblockelement durch Krafteinwirkung leicht kippt, die durch den Feineinschnitt gebildete Kante sich aufrichtet und den Wasserfilm auf der Straße durchdringt. Auf diese Weise kann sich das Profilblockelement mit der Oberfläche verzahnen. Es ist auch bekannt, in derartigen Profilblockelementen mehrere derartige Feineinschnitte auszubilden, so dass jeder dieser Feineinschnitte diese Griffwirkung für sich entfaltet. Damit hierbei noch ausreichend gute Trockenperformance ermöglicht wird, werden die Feineinschnitte in großen Abständen von vier oder mehr Millimetern voneinander angeordnet, sodass die Steifigkeit des Profilblockelementes insgesamt ausreichend groß bleibt.

Aus der gattungsbildenden US 2009/0101259 A1 ist ein Laufstreifenprofil bekannt, bei dem in der radial äußeren Oberfläche von Profilelementen zur Verbesserung der Anfangseigenschaften des Reifens die Reibkraftübertragung zur Bodenoberfläche dadurch erhöht wird, dass in der radial äußeren Oberfläche von Profilelementen jeweils eine große Anzahl von eng beieinander angeordneten feinen Rillen ausgebildet werden. Ähnliche Profilblockelemente mit Feineinschnitten said auch aus der EP 2 055 506 A1 bekannt.

Der Erfindung liegt die Aufgabe zugrunde bei einem Laufstreifenprofil mit einfachen Mitteln verbesserten Nassgriff bei guter Trockenperformance zu ermöglichen.

Die Aufgabe wird erfindungsgemäß durch Ausbildung eines Laufstreifenprofils eines Fahrzeugluftreifens mit radial erhabenen durch Rillen voneinander beabstandeten Profilelementen, welche durch eine den Straßenkontakt bildende radial äußere Oberfläche begrenzt sind, wobei in einem oder mehreren Profilelementen parallel zu einander verlaufende Feineinschnitte in der radial äußeren Oberfläche ausgebildet sind, gemäß den Merkmalen von Anspruch 1 gelöst, bei dem in wenigstens einem Profilelement lediglich längs zweier parallel zu einander verlaufender und im Abstand b mit b ≤ 2mm voneinander ausgebildeter Erstreckungslinien Feineinschnitte ausgebildet sind, wobei auf einer ersten der beiden Erstreckungslinie ein Feineinschnitt sich über die gesamte Oberfläche des Profilelementes erstreckt und in zwei unterschiedliche, das Profilblockelement begrenzende Rillen mündet und wobei auf der zweiten Erstreckungslinie wenigstens die Hälfte der Erstreckungslänge der Erstreckungslinie zwischen den beiden Rillen als Feineinschnitt ausgebildet ist.

Durch diese Ausbildung wird ermöglicht, dass das Profilelement lediglich mit einem einzigen Doppelfeineinschnitt aus sehr eng beieinander liegenden Feineinschnitten ausgebildet ist, wodurch die gesamte Steifigkeit des Profilelementes weiter auf hohem Niveau aufrechterhalten bleibt und die Trockenperformance-Eigenschaften auf hohem Niveau ermöglicht werden. Die beiden sehr eng beieinander liegenden Feineinschnitte des Doppelfeineinschnitts bewirken, dass das zwischen den beiden parallelen Feineinschnitten ausgebildete Gummimaterial wie eine sehr flexible Wischlippe wirkt, die leicht unter Krafteinwirkung kippt und somit den Wasserfilm besser durchdringt und sich mit dem Untergrund verzahnt. Die hohe Flexibilität der Wischlippe verbessert hierdurch die Nässetraktion. Die eng beieinander ausgebildeten Feineinschnitte bewirken, dass dieser hierdurch ausgebildete Doppelfeineinschnitt aus Gesichtspunkten der Steifigkeit des Profilelementes wie ein einziger Feineinschnitt betrachtet werden kann. Somit kann durch diese Ausbildung in einfacher Weise erhöhte Nassgriffeigenschaft bei guter Trockenperformance ermöglicht werden.

Besonders vorteilhaft ist die Ausbildung eines Laufstreifenprofils gemäß den Merkmalen von Anspruch 2, wobei die axiale Richtungskomponente der Haupterstreckungsrichtung der Erstreckungslinien größer ist als die in Umfangsrichtung U des Reifens gerichtete Richtungskomponente, wobei insbesondere die Erstreckungslinien geradlinig verlaufend ausgebildet sind. Hierdurch wird in einfacher Weise ermöglicht, dass beim Abrollen des Reifens die axiale Richtungskomponente den größten Wischeffekt entfaltet, wodurch die Traktions- und Bremseigenschaften auf nasser Oberfläche besonders begünstigt werden. Die geradlinige Ausbildung ermöglicht die Erzielung einer breiten durchgehenden Wischkante.

Besonders vorteilhaft ist die Ausbildung eines Laufstreifenprofils gemäß den Merkmalen von Anspruch 3, wobei das Profilelement in der radial äußeren Oberfläche jeweils beiderseits der Erstreckungslinien eine senkrecht zur Erstreckungsrichtung der Erstreckungslinien gemessene Breite aufweist, welche mindestens 15mm beträgt. Hierdurch kann in einfacher Weise eine für Trockenperformance wünschenswert hohe Steifigkeit des Profilelementes eingestellt werden.

Besonders vorteilhaft ist die Ausbildung eines Laufstreifenprofils gemäß den Merkmalen von Anspruch 4, wobei die Feineinschnitte mit einer Einschnittsdicke d ausgebildet sind mit 0,5mm ≤ d ≤ 0,6mm. Die Wischlippe ist hierdurch ausreichend dünn zur sicheren Entfaltung ihrer Stützwirkung und dabei dick genug für eine konventionelle Herstellung.

Besonders vorteilhaft ist die Ausbildung eines Laufstreifenprofils gemäß den Merkmalen von Anspruch 5, wobei die Feineinschnitte jeweils mit einer in radialer Richtung R des Fahrzeugluftreifens ausgehend von der radial äußeren Oberfläche bis zum Feineinschnittsgrund gemessenen Tiefe t ausgebildet sind mit (Pₜ /2) ≤ t ≤ (Pₜ), wobei Pₜ die maximale Profiltiefe von der das Profilelement begrenzenden Rillen - gemessen in radialer Richtung R von der radial äußeren Oberfläche bis zum Rillengrund - darstellt. Die Wirkung des Doppelfeineinschnitts kann hierdurch trotz Abriebes über einen langen Lebenszyklus des Reifens sichergestellt werden.

Besonders vorteilhaft ist die Ausbildung eines Laufstreifenprofils gemäß den Merkmalen von Anspruch 6, wobei die Feineinschnittstiefe t längs der ersten Erstreckungslinie mit t₁ ausgebildet ist und längs der zweiten Erstreckungslinie mit t₂ ausgebildet ist, wobei t₁ ≥ t₂ ≥ 0,5 t₁. Diese Ausbildung ermöglicht eine einfache Ausformbarkeit und eine individuelle Einstellung der Blocksteifigkeit, des Abriebverhaltens und der Stabilität des Blockes.

Besonders vorteilhaft ist die Ausbildung eines Laufstreifenprofils gemäß den Merkmalen von Anspruch 7, wobei auf der zweiten Erstreckungslinie ein Feineinschnitt ausgebildet ist, welcher sich wenigstens über die Hälfte der Erstreckungslänge der Erstreckungslinie zwischen den beiden Rillen erstreckt. Diese Ausbildung ermöglicht eine einfache individuelle Einstellung der Blocksteifigkeit, des Abriebverhaltens und der Stabilität des Blockes.

Besonders vorteilhaft ist die Ausbildung eines Laufstreifenprofils gemäß den Merkmalen von Anspruch 8, wobei auf der zweiten Erstreckungslinie ein Feineinschnitt sich über die gesamte Oberfläche des Profilelementes erstreckt und in die zwei Rillen mündet. Dies ermöglicht eine besonders flexible Wischlippe.

Besonders vorteilhaft ist die Ausbildung eines Laufstreifenprofils gemäß den Merkmalen von Anspruch 9, wobei auf der zweiten Erstreckungslinie ein in zwei Längserstreckungsabschnitte segmentierter Feineinschnitt ausgebildet ist, dessen beide Längserstreckungsabschnitte sich in der Summe ihrer Erstreckungslängen wenigstens über die Hälfte der Erstreckungslänge der Erstreckungslinie zwischen den beiden Rillen erstreckt und dessen Längserstreckungsabschnitte jeweils wenigstens mit einer Erstreckungslänge L₃ ausgebildet sind mit L₃ ≥ 5mm. Dies ermöglicht eine Wischlippenwirkung bei steiferer Ausbildung des Profilblockelementes. Diese Ausbildung ermöglicht eine weitere individuelle Einstellung der Blocksteifigkeit, des Abriebverhaltens und der Stabilität des Blockes.

Die Erfindung wird im Folgenden an Hand der in den Figuren 1 bis 11 dargestellten Ausführungsbeispiele näher erläutert. Darin zeigen
- Fig. 1: Draufsicht auf den Ausschnitt eines Laufstreifenprofils mit Blick auf ein Profilblockelement einer Profilblockreihe,
- Fig. 2: Schnittdarstellung gemäß Schnitt II-II von Fig. 1 mit Blick auf das Profilblockelement,
- Fig. 3: Schnittdarstellung gemäß Schnitt III-III von Fig. 1 mit Blick auf das Profilblockelement,
- Fig, 4: Perspektivische Darstellung des Profilblockelementes der Figuren 1 bis 3,
- Fig. 5: Draufsicht auf ein Profilblockelement entsprechend der Darstellung von Fig. 1 mit alternativer Ausbildung der Feineinschnitte des Profilblockelements,
- Fig. 6: Querschnittsdarstellung gemäß Schnitt VI-VI von Fig. 5 mit Blick auf das Profilblockelement,
- Fig. 7: Querschnittsdarstellung gemäß Schnitt VII-VII von Fig. 5 mit Blick auf das Profilblockelement,
- Fig. 8: Perspektivische Darstellung des Profilblockelementes der Figuren 5 bis 7,
- Fig. 9: Schematische Darstellung des Profilblockelementes der Figuren 5 bis 8 in einer Darstellung entsprechend dem Schnitt von Fig. 6 beim Abrollen auf der Straßenoberfläche zur Erläuterung der Wirkung der durch die Feineinschnitte gebildeten Wischlippe,
- Fig. 10: Draufsicht auf ein Profilblockelement entsprechend den Darstellungen der Figuren 1 bis 4 mit alternativer Ausbildung der Feineinschnitte,
- Fig. 11: Draufsicht auf ein Profilblockelement entsprechend den Darstellungen der Figuren 1 bis 4 mit weiterer alternativer Ausbildung der Feineinschnitte.

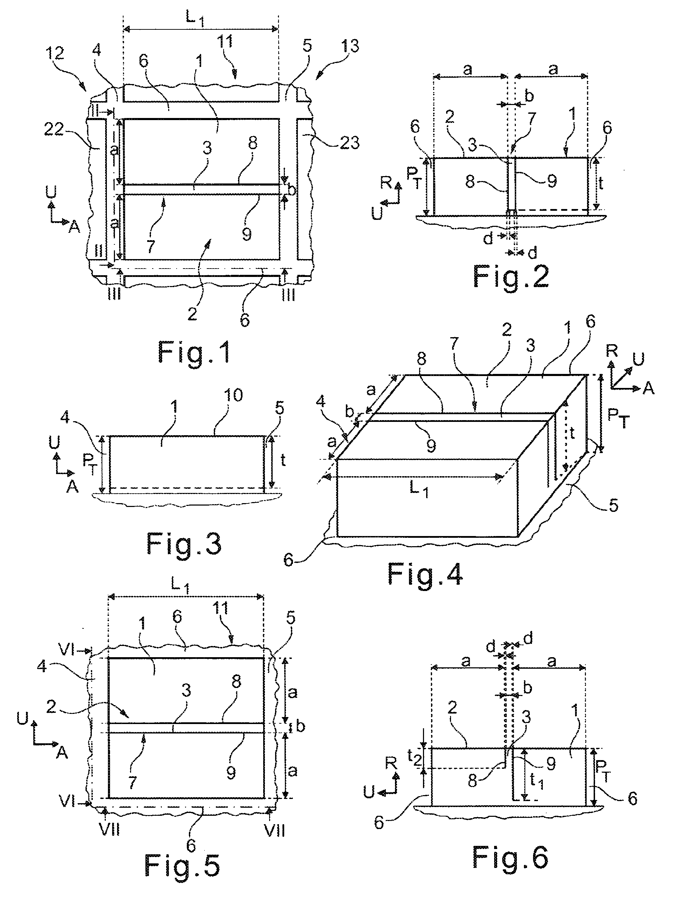

Figuren 1 bis 4 zeigen einen Ausschnitt eines Laufstreifenprofils mit mehreren in Umfangsrichtung U des Fahrzeugluftreifens nebeneinander angeordneten Profilblockreihen 11, 12, 13, welche jeweils über den gesamten Umfang eines Fahrzeugluftreifens erstreckt sind. Die Profilblockreihe 12 und die Profilblockreihe 11 sind jeweils durch eine über den gesamten Umfang des Fahrzeugluftreifens erstreckte und in Umfangsrichtung U ausgerichtete Umfangsrille 4 voneinander in axialer Richtung A beabstandet. Die Profilblockreihe 11 und die Profilblockreihe 13 sind jeweils durch eine über den gesamten Umfangs des Fahrzeugluftreifens erstreckte und in Umfangsrichtung U ausgerichtete Umfangsrille 5 in axialer Richtung A voneinander beabstandet. Die Profilblockreihe 11 ist aus in Umfangsrichtung U hintereinander angeordneten und jeweils in Umfangsrichtung U durch Querrillen 6 voneinander beabstandeten Profilblockelementen 1 ausgebildet. Die Querrillen 6 erstrecken sich in axialer Richtung A jeweils von der Umfangsrille 4 bis in die Umfangsrille 5. Die Profilblockreihe 12 ist jeweils aus in Umfangsrichtung U hintereinander angeordneten und jeweils durch Querrillen voneinander beabstandeten Profilblockelementen 22 ausgebildet.

Die Profilblockreihe 13 ist jeweils aus in Umfangsrichtung U hintereinander angeordneten und jeweils durch Querrillen voneinander beabstandeten Profilblockelementen 23 bekannter Art ausgebildet. Die Profilblockelemente 1 der Profilblockreihe 11 sind in radialer Richtung R des Reifens nach außen jeweils durch eine die Straßenkontaktoberfläche bildende radial äußere Oberfläche 2 begrenzt. In der radial äußeren Oberfläche 2 sind die Profilblockelemente 1 jeweils mit einer in axialer Richtung A ausgebildeten Erstreckungslänge L₁ ausgebildet. In jedem Profilblockelement 1 ist jeweils ein Doppelfeineinschnitt 7 bestehend aus einem Feineinschnitt 8 und aus einem Feineinschnitt 9 ausgebildet, welche sich geradlinig und parallel zueinander über die Erstreckungslänge L₁ von der Umfangsrille 4 bis zur Umfangsrille 5 hindurch erstrecken.

Die Feineinschnitte 8 und 9 sind jeweils mit einer Einschnittsbreite d ausgebildet mit 0,5mm ≤ d ≤ 0,6 mm. Im dargestellten Ausführungsbeispiel ist d = 0,5mm gewählt.

Die Feineinschnitte 8 und 9 sind in einem in der radial äußeren Oberfläche 2 senkrecht zur Erstreckungsrichtung der Feineinschnitte 8 und 9 - und somit im dargestellten Ausführungsbeispiel in Umfangsrichtung U - gemessenen Abstand b zueinander ausgebildet mit b ≤ 2mm. Beispielsweise ist b = 1,5mm gewählt.

Der Feineinschnitt 8 ist mit einem Abstand zu der in Umfangsrichtung vom Feineinschnitt 9 wegweisenden Seite des Feineinschnitts 8 das Profilblockelement 1 begrenzenden Querrille 6 ausgebildet, welcher wenigstens die Abstandslänge a aufweist. Der Feineinschnitt 9 ist mit einem Abstand zu der in Umfangsrichtung vom Feineinschnitt 8 wegweisenden Seite des Feineinschnitts 9 das Profilblockelement 1 begrenzenden Querrille 6 ausgebildet, welcher wenigstens die Abstandslänge a aufweist. Der Abstand a ist dabei mit mindestens 15 mm ausgebildet. Im dargestellten Ausführungsbeispiel ist a = 20mm ausgebildet.

Wie in den Figuren 2,3 und 4 zu erkennen ist, sind die Feineinschnitte 8 und 9 mit einer in radialer Richtung R von der radial äußeren Oberfläche 2 nach radial innen gemessenen Tiefe t ausgebildet, die den radialen Abstand von der radial äußeren Mantelfläche bis zum jeweiligen Feineinschnittsgrund bildet. Die Tiefe t ist dabei mit (P_{t/2}) ≤ t ≤ (Pₜ) ausgebildet, wobei Pₜ die maximale Profiltiefe von den das Profilblockelement 1 begrenzenden Rillen 6, 4 und 5 - gemessen in radialer Richtung R von der radial äußeren Oberfläche 2 des Profilblockelementes 1 bis zum jeweiligen Rillengrund - darstellt.

In dem in den Figuren 1 bis 4 dargestellten Ausführungsbeispiel sind die Feineinschnitte 8 und 9 jeweils mit gleicher axialer Erstreckungslänge L₁ und mit jeweils gleicher radialer Tiefe t ausgebildet. Zwischen den beiden Feineinschnitten 8 und 9 des Doppelfeineinschnitts 7 ist durch das Gummimaterial des Profilblockelementes 1 eine Wischlippe 3 ausgebildet, die sich über die gesamte axiale Erstreckung A des Profilblockelementes 1 erstreckt und die eine Breite b in der radial äußeren Oberfläche 2 aufweist.

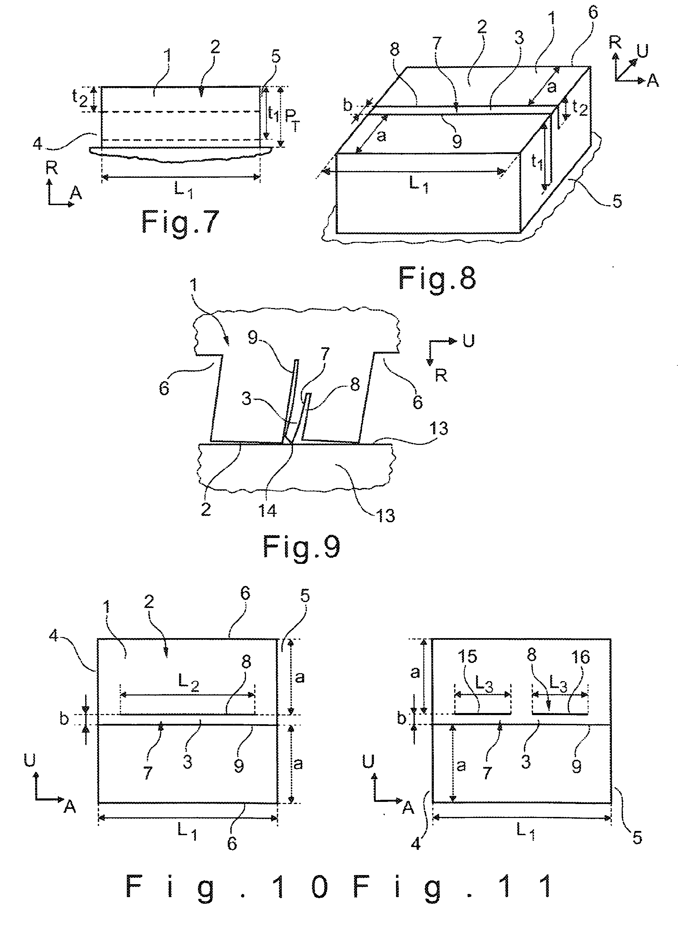

Die Figuren 5 bis 8 zeigen eine alternative Ausbildung des den Figuren 1 bis 4 dargestellten Profilblockelementes 1, bei dem der Feineinschnitt 8 des Doppelfeineinschnitts 7 und der Feineinschnitt 9 des Doppelfeineinschnitts 7 jeweils mit unterschiedlicher maximaler Tiefe ausgebildet sind. Dabei ist beispielsweise der Feineinschnitt 8 mit einer Tiefe t₂ und der Feineinschnitt 9 mit einer Tiefe t₁ ausgebildet, wobei t₁ ≥ t₂ ≥ 0,5 t₁ ausgebildet ist. Im dargestellten Ausführungsbeispiel ist t₂ = 0,5 t₁ ausgebildet. Das Profilblockelement 1 sowie die Doppelfeinschnitte 7 mit den Feineinschnitten 8 und 9 und mit der Wischlippe 3 sind ansonsten wie im Zusammenhang mit den Figuren 1 bis 4 erläutert ausgebildet. In Figur 9 ist anhand des in den Figuren 5 bis 8 dargestellten Ausführungsbeispiels schematisch die Funktionsweise des Doppelfeineinschnittes 7 mit dem Feineinschnitt 8 und 9 und der hierdurch gebildeten Wischlippe 3 dargestellt. Die Fig. 9 zeigt dabei das Abrollen des Profilblockelementes mit seiner radial äußeren Oberfläche 2 auf einer Straßenoberfläche 13 bei Einwirkung einer in Umfangsrichtung U wirkenden Kraft. Dabei ist erkennbar, dass die Wischlippe 3 aufgrund ihrer hohen Flexibilität soweit verformt wird, dass sie eine regelrechte Griffkante 14 bildet, die auf die Straßenkontaktoberfläche 13 einwirkt. Soweit auf der Straßenoberfläche 13 ein Nässefilm ausgebildet ist, greift diese Griffkante 14 der Wischlippe 3 regelrecht durch den Nässefilm hindurch und verkrallt sich in die Straßenoberfläche.

Fig. 10 zeigt die Draufsicht auf ein Profilblockelement 1, wie es beispielsweise in den Figuren 1 bis 4 oder in den Figuren 5 bis 8 dargestellt ist, wobei der Feineinschnitt 8 des Doppelfeineinschnitts 7 mit einer Erstreckungslänge L₂ ausgebildet ist und der Feineinschnitt 9 mit der Erstreckungslänge L₁. Die Erstreckungslänge L₂ des Feineinschnitts 8 ist dabei mit L₁ ≥ L₂ ≥ (0,5 L₁) ausgebildet. Im dargestellten Ausführungsbeispiel ist L₂ mit L₂ = (0,75L₁) ausgebildet. Dabei endet der Feineinschnitt 8 in axialer Richtung A jeweils mit einem Abstand zur Umfangsrille 4 und zur Umfangsrille 5.

Fig. 11 zeigt ein weiteres alternatives Ausführungsbeispiel, bei dem der Feineinschnitt 8 längs seiner Erstreckung segmentiert ausgebildet ist mit einem Feineinschnittsegment 15 der Erstreckungslänge L₃ und mit einem Feineinschnittsegment 16 ebenfalls der Erstreckungslänge L₃, wobei die beiden Feineinschnittsegmente 15 und 16 längs der Erstreckungsrichtung des Feineinschnittes 8 voneinander beabstandet sind. Die Erstreckungslänge L₃ ist dabei jeweils mit L₃ ≥ 5mm gewählt. Im dargestellten Ausführungsbeispiel ist L₃ = 12mm gewählt.

Das in axialer Richtung A zur Umfangsrille 4 hin näher angeordnet ausgebildete Feineinschnittsegment 15 endet mit Abstand zur Umfangsrille 4. Das zur Umfangsrille 5 hin näher angeordnete Feineinschnittsegment 16 endet in seiner axialen Erstreckung mit Abstand zur Umfangsrille 5. Die Erstreckungslänge L₃ der beiden Feineinschnittsegmente 15 und 16 ist dabei so gewählt, dass die Summe ihrer Einzelerstreckungslängen, d.h. (2 L₃) mit L₁ ≥ (2 L₃) ≥ (0,5L₁) ausgebildet ist. Im dargestellten Ausführungsbeispiel ist (2L₃) =(2/3)L₁ ausgebildet.

Die Feineinschnitte 8 und 9 der Ausführungsbeispiele von Fig. 10 und 11 sind hinsichtlich ihrer Dickenausbildung d und ihrer Tiefenerstreckung dabei in einer Ausführung jeweils gemäß den zu den Figuren 1 bis 4 dargelegten Erläuterungen und in anderer Ausführung gemäß den zu den Figuren 5 bis 8 dargelegten Erläuterungen ausgebildet.

### Bezugszeichenliste

### (Teil der Beschreibung)

- 1: Profilblockelement
- 2: Radial äußere Oberfläche
- 3: Wischlippe
- 4: Umfangsrille
- 5: Umfangsrille
- 6: Querrille
- 7: Doppelfeineinschnitt
- 8: Feineinschnitt
- 9: Feineinschnitt
- 10 11: Profilblockreihe
- 12: Profilblockreihe
- 13: Straßenoberfläche
- 14: Kante
- 15: Feineinschnittssegment
- 16: Feineinschnittssegment
- 17 18 19 20 21 22: Profilblockelement
- 23: Profilblockelement

## Patentansprüche

1. Laufstreifenprofil eines Fahrzeugluftreifens mit radial erhabenen durch Rillen (4,5,6) voneinander beabstandeten Profilelementen (1), welche durch eine den Straßenkontakt bildende radial äußere Oberfläche (2) begrenzt sind, wobei in einem oder mehreren Profilelementen (1) parallel zu einander verlaufende Feineinschnitte (8,9) in der radial äußeren Oberfläche (2) ausgebildet sind,
**dadurch gekennzeichnet,**
**dass** in wenigstens einem Profilelement (1) lediglich längs zweier parallel zu einander verlaufender und im Abstand b mit b ≤ 2mm voneinander ausgebildeter Erstreckungslinien Feineinschnitte (8,9) ausgebildet sind, wobei auf einer ersten der beiden Erstreckungslinie ein Feineinschnitt (9) sich über die gesamte Oberfläche (2) des Profilelementes (1) erstreckt und in zwei unterschiedliche, das Profilblockelement (1) begrenzende Rillen (4,5) mündet und wobei auf der zweiten Erstreckungslinie wenigstens die Hälfte der Erstreckungslänge der Erstreckungslinie zwischen den beiden Rillen (4,5) als Feineinschnitt (8) ausgebildet ist.

2. Laufstreifenprofil gemäß den Merkmalen von Anspruch 1,
wobei die axiale Richtungskomponente der Haupterstreckungsrichtung der Erstreckungslinien größer ist als die in Umfangsrichtung U des Reifens gerichtete Richtungskomponente,
wobei insbesondere die Erstreckungslinien geradlinig verlaufend ausgebildet sind.

3. Laufstreifenprofil gemäß den Merkmalen von Anspruch 1 oder 2,
wobei das Profilelement (1) in der radial äußeren Oberfläche (2) jeweils beiderseits der Erstreckungslinien eine senkrecht zur Erstreckungsrichtung der Erstreckungslinien gemessene Breite aufweist, welche mindestens 15 mm beträgt.

4. Laufstreifenprofil gemäß den Merkmalen von einem oder mehreren der vorangegangenen Ansprüche,
wobei die Feineinschnitte (8,9) mit einer Einschnittsdicke d ausgebildet sind mit 0,5mm ≤ d ≤ 0,6mm.

5. Laufstreifenprofil gemäß den Merkmalen von einem oder mehreren der vorangegangenen Ansprüche,
wobei die Feineinschnitte (8,9) jeweils mit einer in radialer Richtung R des Fahrzeugluftreifens ausgehend von der radial äußeren Oberfläche (2) bis zum Feineinschnittsgrund gemessenen Tiefe t ausgebildet sind mit (Pₜ /2) ≤ t ≤ (Pₜ), wobei Pₜ die maximale Profiltiefe von der das Profilelement (1) begrenzenden Rillen (4,5,6) - gemessen in radialer Richtung R von der radial äußeren Oberfläche (2) bis zum Rillengrund - darstellt.

6. Laufstreifenprofil gemäß den Merkmalen von Anspruch 5,
wobei die Feineinschnittstiefe t längs der ersten Erstreckungslinie mit einer Tiefe t₁ ausgebildet ist und längs der zweiten Erstreckungslinie mit einer Tiefe t₂ ausgebildet ist, wobei t₁ ≥ t₂ ≥ 0,5 t₁.

7. Laufstreifenprofil gemäß den Merkmalen von einem oder mehreren der vorangegangenen Ansprüche,
wobei auf der zweiten Erstreckungslinie ein Feineinschnitt (8) ausgebildet ist, welcher sich wenigstens über die Hälfte der Erstreckungslänge der Erstreckungslinie zwischen den beiden Rillen (4,5) erstreckt.

8. Laufstreifenprofil gemäß den Merkmalen von Anspruch 7,
wobei auf der zweiten Erstreckungslinie ein Feineinschnitt (8) sich über die gesamte Oberfläche (2) des Profilelementes (1) erstreckt und in die zwei Rillen (4,5) mündet.

9. Laufstreifenprofil gemäß den Merkmalen von Anspruch 7,
wobei auf der zweiten Erstreckungslinie ein in zwei Längserstreckungsabschnitte (15,16) segmentierter Feineinschnitt (8) ausgebildet ist, dessen beide Längserstreckungsabschnitte (15,16) sich in der Summe ihrer Erstreckungslängen wenigstens über die Hälfte der Erstreckungslänge der Erstreckungslinie zwischen den beiden Rillen (4,5) erstreckt und dessen Längserstreckungsabschnitte (15,16) jeweils wenigstens mit einer Erstreckungslänge L₃ ausgebildet sind mit L₃ ≥ 5mm.

## Claims

1. Tread profile of a pneumatic vehicle tyre having radially raised profile elements (1) which are spaced apart by means of grooves (4, 5, 6) and which are delimited by a radially outer surface (2) forming the road contact, wherein sipes (8, 9) which extend parallel to one another in one or more profile elements (1) are formed in the radially outer surface (2), **characterized in that** sipes (8, 9) are formed in at least one profile element (1) merely along two extension lines which extend parallel to one another and are formed at a distance b from one another, where b ≤ 2 mm, wherein a sipe (9) extends on a first of the two extension lines over the whole surface (2) of the profile element (1) and leads into two different grooves (4, 5) delimiting the profile block element (1), and wherein on the second extension line at least half of the extension length of the extension line between the two grooves (4, 5) is formed as a sipe (8).

2. Tread profile according to the features of Claim 1, wherein the axial direction component of the main extension direction of the extension lines is greater than the direction component directed in the circumferential direction U of the tyre, wherein in particular the extension lines are designed to extend rectilinearly.

3. Tread profile according to the features of Claim 1 or 2, wherein the profile element (1) in the radially outer surface (2) has, in each case on both sides of the extension lines, a width measured perpendicular to the extension direction of the extension lines that is at least 15 mm.

4. Tread profile according to the features of one or more of the preceding claims, wherein the sipes (8, 9) are formed with a sipe thickness d, where 0.5 mm ≤ d ≤ 0.6 mm.

5. Tread profile according to the features of one or more of the preceding claims, wherein the sipes (8, 9) are in each case formed with a depth t measured in the radial direction R of the pneumatic vehicle tyre starting from the radially outer surface (2) to the sipe bottom, where (Pₜ/2) ≤ t ≤ (Pₜ), where Pₜ represents the maximum profile depth of the grooves (4, 5, 6) delimiting the profile element (1) - measured in the radial direction R from the radially outer surface (2) to the groove bottom.

6. Tread profile according to the features of Claim 5, wherein the sipe depth t along the first extension line is formed with a depth t₁ and is formed along the second extension line with a depth t₂, or where t₁≥t₂≥0.5 t₁.

7. Tread profile according to the features of one or more of the preceding claims, wherein a sipe (8) which extends at least over half the extension length of the extension line between the two grooves (4, 5) is formed on the second extension line.

8. Tread profile according to the features of Claim 7, wherein a sipe (8) extends over the whole surface (2) of the profile element (1) on the second extension line and leads into the two grooves (4, 5).

9. Tread profile according to the features of Claim 7, wherein a sipe (8) which is segmented into two longitudinal extension portions (15, 16) is formed on the second extension line, the two longitudinal extension portions (15, 16) of which sipe extend in the sum of their extensions lengths at least over half of the extension length of the extension line between the two grooves (4, 5) and the longitudinal extension portions (15, 16) of which are in each case formed at least with an extension length L₃, where L₃≥5 mm.

## Revendications

1. Profil de bande de roulement pour bandage pneumatique pour roue de véhicule, présentant des éléments profilés (1) en saillie radiale, séparés les uns des autres par des rainures (4, 5, 6) et délimités par une surface radialement extérieure (2) qui forme le contact avec la chaussée, de fines entailles (8, 9) s'étendant parallèlement les unes aux autres étant formées dans la surface radialement extérieure (2) d'un ou plusieurs des éléments profilés (1),
**caractérisé en ce que**
seules deux fines entailles (8, 9) s'étendant parallèlement l'une à l'autre et dont les lignes d'extension sont distantes l'une de l'autre d'une distance b, b ≤ 2 mm, sont formées dans au moins un élément profilé (1),
**en ce que** sur une première des deux lignes d'extension, une fine entaille (9) s'étend sur toute la surface (2) de l'élément profilé (1) et débouche dans deux rainures (4, 5) différentes qui délimitent l'élément (1) de bloc profilé et
**en ce que** sur la deuxième ligne d'extension, au moins la moitié de la longueur de l'extension de la ligne d'extension est configurée en fine entaille (8) entre les deux rainures (4, 5).

2. Profil de bande de roulement selon les caractéristiques de la revendication 1, dans lequel la composante axiale de l'orientation de la direction d'extension principale des lignes d'extension est supérieure à la composante d'orientation orientée dans la direction périphérique U du bandage de roue, les lignes d'extension s'étendant en particulier en ligne droite.

3. Profil de bande de roulement selon les caractéristiques des revendications 1 ou 2, dans lequel la surface radialement extérieure (2) de l'élément profilé (1) présente des deux côtés des lignes d'extension une largeur mesurée perpendiculairement à la direction d'extension des lignes d'extension qui vaut au moins 15 mm.

4. Profil de bande de roulement selon les caractéristiques d'une ou plusieurs des revendications précédentes, dans lequel les fines entailles (8, 9) ont une épaisseur d, avec 0,5 mm ≤ d ≤ 0,6 mm.

5. Profil de bande de roulement selon les caractéristiques d'une ou plusieurs des revendications précédentes, dans lequel les fines entailles (8, 9) présentent chacune une profondeur t, mesurée dans la direction radiale R du bandage pneumatique pour roue de véhicule en partant de la surface radialement extérieure (2) jusqu'au fond de la fine entaille, avec (Pₜ/2) ≤ t ≤ (Pₜ), Pₜ étant la profondeur maximale du profil de la rainure (4, 5, 6) qui délimite l'élément profilé (1), mesurée dans la direction radiale R depuis la surface radialement extérieure (2) jusqu'au fond de la rainure.

6. Profil de bande de roulement selon les caractéristiques de la revendication 5, dans lequel la profondeur t de la fine entaille a une valeur t₁ le long de la première ligne d'extension et une valeur t₂ le long de la deuxième ligne d'extension, avec t₁ ≥ t₂ ≥ 0,5 t₁.

7. Profil de bande de roulement selon les caractéristiques d'une ou plusieurs des revendications précédentes, dans lequel une fine entaille (8) est formée sur la deuxième ligne d'extension et s'étend entre les deux rainures (4, 5) au moins sur la moitié de la longueur de la ligne d'extension.

8. Profil de bande de roulement selon les caractéristiques de la revendication 7, dans lequel une fine entaille (8) s'étend sur la deuxième ligne d'extension sur toute la surface (2) de l'élément profilé (1) et débouche dans les deux rainures (4, 5).

9. Profil de bande de roulement selon les caractéristiques de la revendication 7, dans lequel une fine entaille (8) segmentée en deux sections (15, 16) d'extension longitudinale est formée sur la deuxième ligne d'extension, la somme de la longueur des deux sections (15, 16) de l'extension longitudinale s'étendant entre les deux rainures (4, 5) au moins sur la moitié de la longueur de la ligne d'extension, ces sections (15, 16) d'extension longitudinale présentant chacune au moins une longueur d'extension L₃, L₃ ≥ 5 mm.
